# EUROPEAN PATENT APPLICATION

(11) **EP 4 351 085 A1**
(43) Date of publication of application: **10.04.2024**
(21) Application number: 22306518.6
(22) Date of filing: 08.10.2022
(51) Int. Cl.: H04L 9/40, G06F 3/01, G06F 21/32, G06N 20/00, H04L 67/12, H04L 67/02

(54) **SYSTEM AND METHOD OF ELECTROENCEPHALOGRAPHY (EEG) CONTINUOUS AUTHENTICATION AND MENTAL AND SYNCHRONY ASSESSMENTS**

(71) Applicant: THALES DIS FRANCE SAS, 92190 Meudon (FR); THALES, 92400 Courbevoie (FR)
(72) Inventor: HUGOT, Didier, 92350 Le Plessis Robinson (FR); SIDLER, Philippe, 95600 Eaubonne (FR)
(74) Representative: Grevin, Emmanuel

(57) **Abstract**

A system and method for authentication during a login process using electroencephalography (EEG) signals can include collecting EEG data from one or more sensors for a claimed identity, initiating an EEG authentication process comparing the EEG data with a stored model of the claimed identity, granting authentication and access to the claimed identity to a secure computer resource if the EEG data match at or above a threshold value with the stored model, maintaining authentication and access by continuous skin-contact monitoring, and performing a mental state assessment based on EEG features of the EEG data collected while the method continues to grant access to the secure computer resources while no degraded mental state is detected. The method can further perform a synchrony assessment based EEG data collected from one or more sensors from the claimed identity and from at least a second claimed identity in team collaboration.

## Description

### CROSS-REFERENCE TO RELATED APPLICATIONS

Not applicable.

### TECHNICAL FIELD

The present disclosure generally relates to authenticating users to an access device. More particularly, but not exclusively, the present disclosure relates to EEG based authentication of users to an access device.

### BACKGROUND

Users of secure computer resources continue to find existing management of access with passwords cumbersome and inconvenient. Average users are estimated to have over 100 passwords driving many users to use simple and very unsecure passwords such as "PASSWORD", "QWERTY", and "123456". Password vulnerabilities are estimated to make up well over half of the break-ins or hacks of such secure computer resources.

Existing authentication systems use a number of biometric signals to authenticate or attempt to authenticate users including facial recognition, fingerprint recognition, voice recognition, iris recognition, and Electroencephalography (EEG). A biometric is a physical or behavioral characteristic of a person that can be used to determine or authenticate a person's identity. Biometrics such as fingerprint impressions have been used in law enforcement agencies for decades to identify criminals. More recently, other biometrics such as face, iris and signature are starting to be used to identify persons in many types of transactions. An automated biometrics identification system analyzes a biometrics signal using pattern recognition techniques and arrives at a decision whether the query biometrics signal is already present in the database. An authentication system tests whether the query biometrics is equal, or similar, to the stored biometrics associated with the claimed identity. Existing systems are typically inconvenient and not continuous.

Biometrics is also used in other contexts to determine the condition of an individual. For example, in an automotive context, a camera can focus on a driver's eyelids to determine parameters (e.g., eyelid flutter) correlated to a possible indication of drowsiness to provide a driver with an advanced warning. In yet other contexts, biometrics is used for analyzing parameters among groups of people in a joint effort such as reviewing a movie or in other team efforts.

US Patent No. 10778672 granted on September 15, 2020 to International Business Machines Corp. discloses a method for secure biometrics matching with split phase client-server matching protocol, where a first biometric input is received in an electronic device. The first biometric input is stored in the electronic device as a biometric profile and, the biometric profile is sent to a server. An additional biometric input is received from a user in the electronic device and, the additional biometric input is compared to the biometric profile stored in the electronic device to generate a local matching score. The additional biometric input is sent to the server. The local matching score and a remote matching score generated by the at least one server are compared and, it is determined whether to authenticate the user based on the comparison of the local matching score and the remote matching score. Such a system fails to focus on EEG signals and is not continuous. Furthermore, such system fails to show a convenient way to enable users to log onto a secure computer system.

US Patent No. 9876791 granted on January 23, 2018 to Samsung Electronics Co. Ltd discloses a method and apparatus for authenticating a user. Such authentication apparatus includes a data set generator configured to generate an authentication data set by extracting waveforms from a biosignal of a user, a similarity calculator configured to match each of the extracted waveforms to registered waveforms included in a registration data set, and calculate a similarity between each of the extracted waveforms and the registered waveforms, and an auxiliary similarity calculator configured to extract a representative authentication waveform indicating a representative waveform of the extracted waveforms and a representative registration waveform indicating a representative waveform of the registered waveforms, and calculate a similarity between the representative authentication waveform and the representative registration waveform. Again, such system fails to focus on an EEG implementation that is continuous and convenient for enabling users to log into a secure computer system.

US Patent No. 10198713 granted on Feb. 5, 2019 to The Nielsen Company (US), LLC discloses a method and system for predicting the behavior of an audience based on the biologically based responses of the audience to a presentation that provides a sensory stimulating experience and determining a measure of the level and pattern of engagement of that audience to the presentation. In particular, the US Patent No. 10198713 is directed to a method and system for predicting whether an audience is likely to view a presentation in its entirety. In addition, it can be used to determine the point at which an audience is likely to change their attention to an alternative sensory stimulating experience including fast forwarding through recorded content, changing the channel or leaving the room when viewing live content, or otherwise redirecting their engagement from the sensory stimulating experience. Again, such systems fail to focus on an EEG implementation that is continuous and convenient for enabling users to log into a secure computer system and that further performs such assessments conveniently.

US Patent No. 9836703 granted on December 5, 2017 to Advanced Brain Monitoring, Inc. discloses techniques for monitoring neurophysiological indicators of the members of a team while performing one or more collaborative tasks, for analyzing the collected neurophysiologic data and environmental data, for generating feedback, and for generating assessments of the performance of the team based on the collected data are provided. Feedback can be created based on the assessments of the team performance. Assessments of team performance can be performed in real time and feedback can also be provided in real time. In other embodiments, feedback can be provided to team members and / or the team as a whole after training exercise and / or simulation has been completed. Once again, such systems fail to focus on an EEG implementation that is continuous and convenient for enabling users to log into a secure computer system and that further performs such assessments conveniently.

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments, a system for authentication during a login process using electroencephalography (EEG) signals can include one or more processors, and a memory coupled to the one or more processors where the memory contains computer instructions which when executed causes the one or more processors to perform steps at a client device. Such steps can include recognizing a user identity or claimed identity or username as an input for access to a secure computer resource, collecting EEG data from one or more sensors, initiating an EEG authentication process using an access management and authentication service via a Brain Computer Interface (BCI) server in communication with a BCI Authentication module upon detecting the user identity (or the claimed identity or the username) and the EEG data, forwarding the EEG data to the BCI Authentication module via the BCI server, receiving a result from the BCI Authentication module via the BCI server, notifying the access management and authentication service of the result from the BCI Authentication module, and granting access to the secure computer resource if the result is a success. In some embodiments, the system is further configured to deny access to secure computer resources if the result is a failure.

In some embodiments, a head worn apparatus having EEG sensors performs the step of collecting the EEG data from the one or more sensors.

In some embodiments, a head worn apparatus having at least two EEG sensors including two electrodes performs the step of collecting the EEG data from the one or more sensors.

In some embodiments, a headset equipped with EEG sensors, a photoplethysmography (PPG) sensor, an accelerometer, and a gyroscope performs the step of collecting the EEG data from the one or more sensor.

In some embodiments, an MQTT broker using a publish and subscribe protocol is used to forward the EEG data to the BCI Authentication module and to send the result from the BCI Authentication module to the client device.

In some embodiments, a head-worn apparatus having at least two EEG sensors performs as a data acquisition unit that further uses wireless communications such as Bluetooth or WiFi to connect the at least two EEG sensors for streaming the EEG data to a BCI Authentication module.

In some embodiments, the BCI authentication module receives the EEG data, loads a machine-learning model corresponding to the user identity (or claimed identity or username) entered as the input and outputs a prediction based on a comparison between the EEG data currently received and the machine-learning module.

In some embodiments, the secure computer resource is a secure web site and where the access management and authentication service sends a login web app to a browser in the client device wherein the login web app connects an EEG enabled headset using Bluetooth to collect the EEG data from the one or more sensors and forwards the EEG data to the BCI server and further receives the result from the BCI server.

In some embodiments, the secure computer resource uses a Winlogon system process which uses a Windows Logon Agent (WLA) as part of the access management and authentication service and wherein the WLA calls the BCI server to start a new EEG authentication after detection of the user identity (or claimed identity or username) as the input. In some embodiments, the WLA connects an EEG enabled headset having the one or more sensors and collects the EEG data using Bluetooth wireless communications from the EEG enabled headset, sends the EEG data to the BCI server and further receives notification from the BCI server of the result of the authentication.

In some embodiments, the system continues to capture and process the EEG data in a background process after the success of an initial authentication.

In some embodiments, the system is further configured to log off or automatically lock a Windows PC when the one or more EEG sensors stop collecting EEG data and start receiving a noisy signal.

In some embodiments, a head worn apparatus used for authentication during a login process using electroencephalography (EEG) signals includes one or more EEG sensors, one or more processors, a memory coupled to the one or more processors and the one or more EEG sensors, the memory containing computer instructions which when executed causes the one or more processors to perform certain operations. The operations can include collecting EEG data from the one or more EEG sensors upon recognizing a user identity (or a claimed identity or a username) as an input for access to a secure computer resource, initiating an EEG authentication process with an access management and authentication service via a Brain Computer Interface (BCI) server in communication with a BCI Authentication module upon detecting the user identity (or the claimed identity the username) and the EEG data, sending the EEG data to the BCI Authentication module via the BCI server, and continuing to capture and sending the EEG data in a background process to the BCI server after an initial successful authentication and logon.

In some embodiments, a method for authentication during a login process using electroencephalography (EEG) signals can include initiating an EEG authentication process using an access management and authentication service (STA) via a Brain Computer Interface (BCI) server in communication with a BCI Authentication module upon detecting a user identity (or a claimed identity or a username) as an input for access to a secure computer resource on a client device and upon collecting EEG data from one or more sensors from a head worn apparatus, forwarding the EEG data to the BCI Authentication module, receiving a result from the BCI Authentication module, notifying the access management and authentication service of the result from the BCI Authentication module. In some embodiments, the access management and authentication service grants access to the secure computer resource if the result from the BCI Authentication module is a success.

In some embodiments, a system for authentication during a login process using electroencephalography (EEG) signals can include one or more processors, a memory coupled to the one or more processors where the memory contains computer instructions which when executed causes the one or more processors to perform certain operations. Such operations can include collecting EEG data from one or more sensors for a claimed identity, initiating an EEG authentication process comparing the EEG data with a stored model of the claimed identity, receiving authentication and access to the claimed identity to a secure computer resource if the EEG data match at or above a threshold value with the stored model of the claimed identity, receiving and maintaining authentication and access by continuous skin-contact monitoring based on a threshold crossing detection, wherein access to the secure computer resources remains while no threshold crossing is detected, performing a personalized mental state assessment based on EEG features of the EEG data collected, wherein the personalized mental state assessment is performed continually, and continuing to grant access to the secure computer resources while no degraded mental state is detected beyond a threshold value.

In some embodiments, the one or more processors are further configured to deny access to the secure computer resources upon detection of a degraded mental state beyond the threshold value.

In some embodiments, the step of performing the personalized mental state assessment is performed continually in real-time or periodically.

In some embodiments, the one or more processors are further configured to perform a synchrony assessment based on EEG features of the EEG data collected from one or more sensors from the claimed identity and from one or more sensors for a second claimed identity in team collaboration with the claimed identity.

In some embodiments, the one or more processors are further configured to perform a synchrony assessment based on EEG features of the EEG data collected from one or more sensors from two or more claimed identities based on a hyperscanning methodology that captures EEG signals from multiple claimed identities simultaneously. In some embodiments, the personalized mental state assessment monitors an individual's human state based on correlated values for workload, stress, fatigue, or attention and the synchrony assessment monitors a team state with respect to synchronization between brain activity among team members.

In some embodiments, a head-worn apparatus having at least two EEG sensors performs as a data acquisition unit that further uses wireless communications to connect the at least two EEG sensors for streaming the EEG data to a Brain Computer Interface (BCI) Authentication module.

In some embodiments, the secure computer resource is a secure web site and wherein an access management and authentication service sends a login web app to a browser in a client device wherein the login web app connects an EEG enabled headset using Bluetooth to collect the EEG data from the one or more sensors and forwards the EEG data to a BCI server and further receives the result from a BCI server in communication with a BCI authentication module.

In some embodiments, the secure computer resource uses a Winlogon system process which uses a Windows Logon Agent (WLA) as part of an access management and authentication service and wherein the WLA calls a BCI server to start a new EEG authentication after detection of a user identity (or a claimed identity or username) as an input. In some embodiments, the WLA connects an EEG enabled headset having the one or more sensors and collects the EEG data using Bluetooth wireless communications from the EEG enabled headset, sends the EEG data to a BCI server and further receives notification from the BCI server of the result of the authentication, wherein the BCI server is in communication with a BCI authentication module.

In some embodiments, a head worn apparatus used for authentication during a login process using electroencephalography (EEG) signals can include one or more EEG sensors, one or more processors, and a memory coupled to the one or more processors and the one or more EEG sensors where the memory contains computer instructions which when executed causes the one or more processors to perform the steps of collecting EEG data from the one or more EEG sensors upon recognizing a user identity (or a claimed identity or username) as an input for access to a secure computer resource, initiating an EEG authentication process with an access management and authentication service (STA) via a Brain Computer Interface (BCI) server in communication with a BCI Authentication module upon detecting the user identity (or the claimed identity or the username) and the EEG data, sending the EEG data to the BCI Authentication module via the BCI server, continuing to capture and sending the EEG data in a background process to the BCI server after an initial successful authentication and logon to perform a personalized mental state assessment based on EEG features of the EEG data collected, wherein the personalized mental state assessment is performed continually, and continuing to receive access to the secure computer resources while no degraded mental state is detected beyond a threshold value. While many of the steps above can be performed at the head worn apparatus operating as a data acquisition device, the embodiments are not limited to such operations being performed at just the head worn apparatus or at a server or at a client device. In this regard, the operations can be performed at any combination of devices and locations.

In some embodiments, the one or more processors are further configured to perform a synchrony assessment based on EEG features of the EEG data collected from the one or more sensors from the claimed identity and from one or more sensors for at least a second claimed identity in team collaboration with the claimed identity based on a hyperscanning methodology that captures EEG signals from multiple claimed identities simultaneously

In some embodiments, a method for authentication during a login process using electroencephalography (EEG) signals can include collecting EEG data from one or more sensors for a claimed identity, initiating an EEG authentication process comparing the EEG data with a stored model of the claimed identity, granting authentication and access to the claimed identity to a secure computer resource if the EEG data match at or above a threshold value with the stored model of the claimed identity, maintaining authentication and access by continuous skin-contact monitoring based on a threshold crossing detection, wherein access to the secure computer resources remains while no threshold crossing is detected, and performing a personalized mental state assessment based on EEG features of the EEG data collected where the personalized mental state assessment is performed continually while the method continues to grant access to the secure computer resources while no degraded mental state is detected beyond a threshold value. In some embodiments, the method further performs a synchrony assessment based on EEG features of the EEG data collected from one or more sensors from the claimed identity and from one or more sensors for at least a second claimed identity in team collaboration with the claimed identity, wherein the synchrony assessment is based on a hyperscanning methodology that captures EEG signals from multiple claimed identities simultaneously.

In some embodiments, the method further uses the EEG data for silent authentication and detection of liveliness of the claimed identity.

### BRIEF DESCRIPTION OF THE DRAWINGS

Non-limiting and non-exhaustive embodiments are described with reference to the following drawings, wherein like labels refer to like parts throughout the various views unless otherwise specified. The sizes and relative positions of elements in the drawings are not necessarily drawn to scale. For example, the shapes of various elements are selected, enlarged, and positioned to improve drawing legibility. The particular shapes of the elements as drawn have been selected for ease of recognition in the drawings. One or more embodiments are described hereinafter with reference to the accompanying drawings in which:
FIG. 1 illustrates a system of authentication using EEG signals in accordance with the embodiments;
FIGs. 2A and 2B illustrate headsets having EEG sensors that can be used in the system of FIG. 1 in accordance with the embodiments;
FIG. 3 illustrates another system for authentication using EEG signals in accordance with the embodiments;
FIG. 4 illustrates a system for authentication using a Windows Logon Agent in accordance with the embodiments;
FIG. 5 illustrates a flow chart illustrating a method of authentication using EEG signals in accordance with the embodiments;
FIG. 6 illustrates another system for authentication using EEG signals that further makes mental state assessments in accordance with the embodiments;
FIG. 7 illustrates another system for authentication using EEG signals that further makes mental state assessments and synchrony assessments in accordance with the embodiments;
FIG. 8 illustrates a flow chart illustrating a method of authentication using EEG signals using the system of FIG. 7 in accordance with the embodiments; and
FIG. 9 illustrates another system for authentication using EEG signals that further makes mental state assessments and synchrony assessments in accordance with the embodiments.

### DETAILED DESCRIPTION

In the following description, certain specific details are set forth in order to provide a thorough understanding of various disclosed embodiments. However, one skilled in the relevant art will recognize that embodiments may be practiced without one or more of these specific details, or with other methods, components, materials, etc. Also in these instances, well-known structures may be omitted or shown and described in reduced detail to avoid unnecessarily obscuring descriptions of the embodiments.

A number of acronyms are frequently used in this application and are defined here for ease of understanding. Such acronyms include **EEG** for ElectroEncephaloGraphy, **BCI** for Brain Computer Interfac, **STA** for SafeNet Trusted Access, and **WLA** for Windows Logon Agent. Also, **DAU** stands for Data Acquisition Unit.

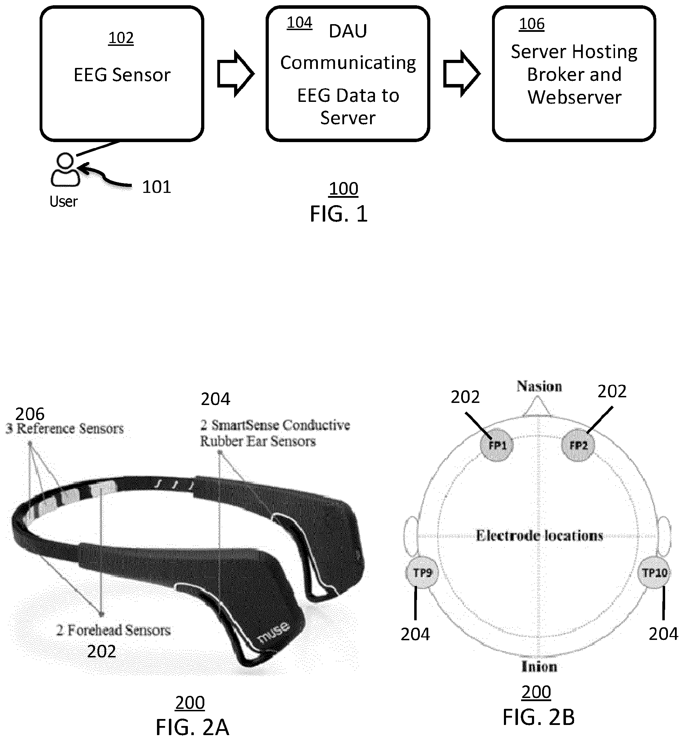

In some embodiments, a system 100 for authentication during a login process using electroencephalography (EEG) signals as shown in FIG. 1 can generally include three components such as sensors 102, one or more data acquisition units (DAUs) 104, and a server 106. In some embodiments, the server and DAU's are both available as docker containers to be run at different or the same hardware.

In some embodiments, the server 106 can host a Broker and a Webserver. The broker is for communication between all components and the webserver can be used for hosting a dashboard for visualization of all data. The Data Acquisition Units 104 can make the connections to the server 106 and pass wireless data such as Bluetooth or WiFi data from the sensors 102 that would be placed on a user 101. This presumes that the DAUs 104 have wireless connectivity such as Bluetooth transceivers. In some embodiments, the sensors 102 can be any number of EEG sensors.

In some embodiments, the sensors can be a part of a head worn device or apparatus such as the Muse 2 or Muse S headset sensor device. Such Muse headsets include a four channel EEG sensor, a PPG sensor, an accelerometer, and a gyroscope. For example, FIGs. 2A and 2B illustrate a headset 200 having two forehead sensors or electrodes 202 and two temporal electrodes 204. Optionally, such headset can further include other sensors such as reference sensors 206 that can include a photoplethysmography (PPG) sensor, an accelerometer, and a gyroscope. Although the Muse headset can be used, the embodiment are not limited thereto and other headsets or devices having EEG sensors coupled to the skull in headsets or other form factors are contemplated within the scope of the claims such as a visor with headphones or caps or headbands having the appropriately placed EEG sensors. In some embodiments, the openBCI sensor platform can be integrated into any number of form factors including headsets

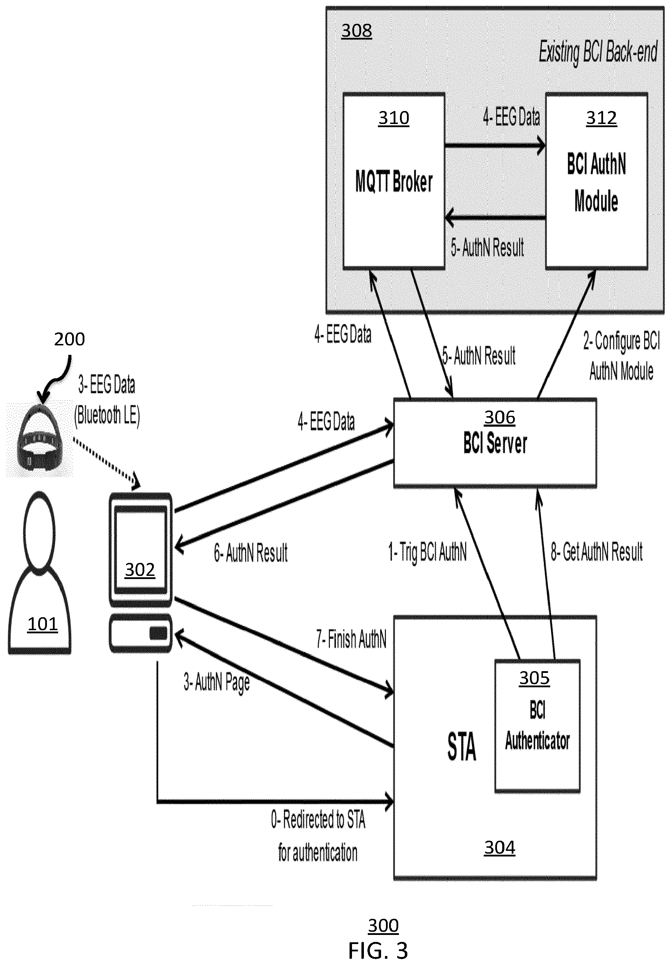

In some embodiments, a use case as illustrated by the system 300 of FIG. 3 requires a user 101 to wear a headset 200 equipped with electroencephalography (EEG) sensors to measure their brain activity. As noted above, a Muse S headband equipped with 4 EEG sensors can be an example of such a headset 200 which includes frontal electrodes (AF7 and AF8) and temporal electrodes (TP9 and TP10).

By analyzing the brain activity of the user 101, the systems and methods herein can authenticate such user thanks to a machine-learning based "BCI Authentication Module" 312 provided by the TRT/SIX-ThereSIS labs, an affiliate of the Applicant herein. The BCI Authentication Module 312 can part of a BCI backend system 308 that further includes a broker such as an MQTT Broker 310.

More particularly, the MQTT Broker 310 can be the main communication between the modules, where the MQTT broker uses a publish and subscribe protocol. An example of such protocol can be obtained from HiveMQ GmbH. Although the embodiments describe the use of an MQTT Broker, the MQTT Broker is just one example of two-way communication channel that can forward EEG data (one way) and send a result (in a second way). Thus, the use of the MQTT Broker is but one example of a possible two-way communication protocol that can be used within contemplation of the embodiment. Other protocols such as gRPC and WebSocket and others can be used instead.

In some embodiments, the system 300 can include a webserver (dashboard) that hosts a dashboard for visualization of all data streams. In some embodiments, all data is received using MQTT and persistent info topics can be used for static meta data and data topics for streaming realtime data.

With respect to the Data Acquisition Module or DAU, the headset 200 can serve as part of the DAU and further use wireless protocols such as Bluetooth to connect to the EEG sensors from the DAU using the Dashboard in server 306. The DAU makes the connection, sets the configuration for the sensor, and starts streaming the sensor data to the right MQTT topics.

The Authentication Module 312 subscribes to the raw EEG data topic and loads the personal machine learning model for the user 101 connected to the DAU (200). The Authentication module 312 predicts the current data to the model and outputs the prediction that the user 101 is the person listed to the DAU 200.

By using several recordings of brain activity (EEG data), a machine-learning model specific to the user can be created. This model can then used to determine if new EEG data comes from the same user or not (in the process of EEG authentication).

The embodiments further provide silent authentication. As soon as the user wears their EEG-enabled headset (200), the brain activity is captured and processed by the BCI Authentication Module 312. The embodiments further provide for continuous authentication. In this regard, the EEG capture and processing continues in a background process after the user has been successfully authenticated and removing their EEG-enabled headset automatically sign the user out.

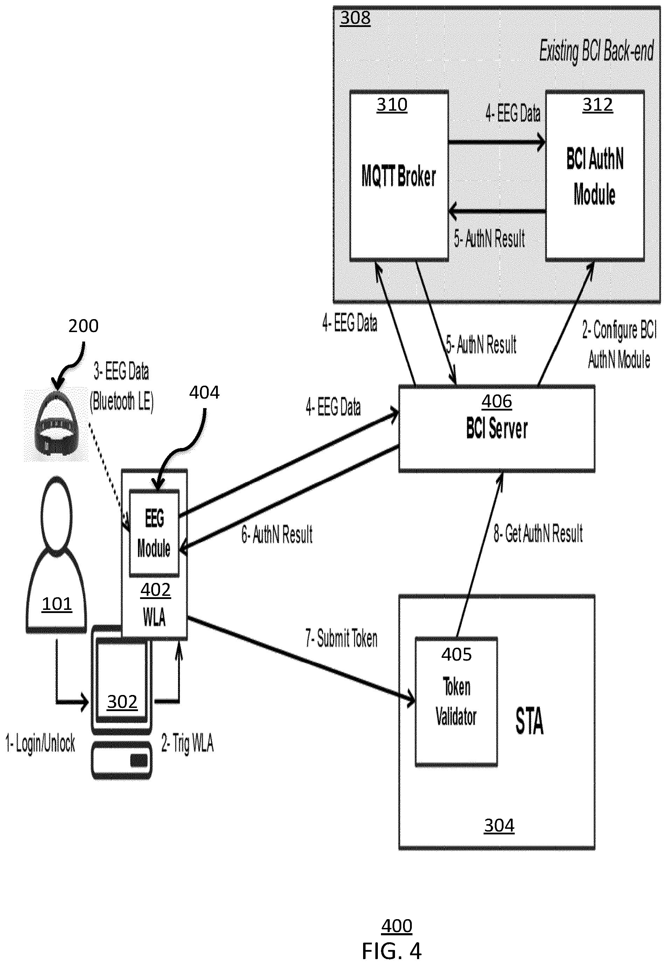

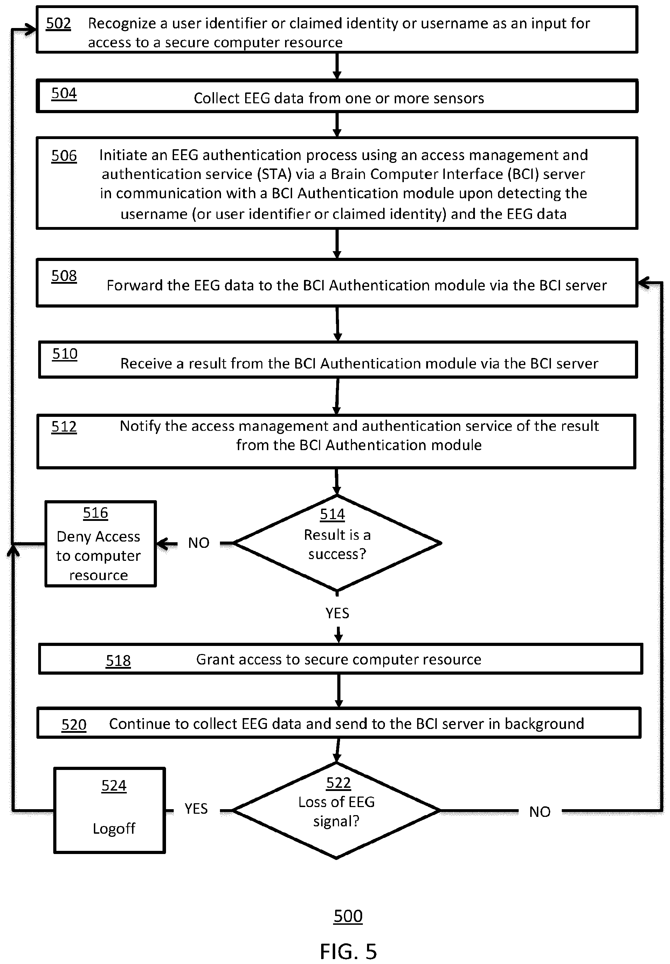

FIGs. 3, 4, and 5 illustrate some use cases. FIG. 3 illustrates a use case where a web site authentication online logon process is performed. FIG. 4 illustrates a user case where a Windows Logon authentication process is performed, and FIG. 5 provides a flow chart of a more generic use case that can encompass authentication when attempting to access a secure computer resource. The use cases generally use a management and authentication service 304 such as the SafeNet Trusted Access (STA) solution.

Referring more particularly to the system 300 and flow of FIG. 3, the system 300 can include a number of modules such as "BCI Back-end" 308 having the BCI Authentication Module 312 (from TRT/SIX-ThereSIS labs) configured with the user-specific machine-learning model receiving EEG data and providing authentication results as well as a broker 310 such MQTT Broker which can be an open-source component used for message routing between clients. The system 300 can further include the BCI Server 306 which can provide a simple interface to the STA 304 to trigger an EEG authentication and obtain the result. The BCI Server 306 can also provide a 2-way communication channel with a Login Web App at the client device 302 to send EEG data from headset 200 and receive notification of authentication success or failure. The SafeNet Trusted Access (STA) 304 can be the authentication solution from Thales (CPL), with a new "BCI Authenticator" 305 enabling EEG authentication. The Login Web App (which can be in JavaScript code) can be provided by the STA BCI Authenticator 305 and can run in the user's browser at the client device 302 to enable the connection to the EEG-enabled headset 200 to forward the EEG data to the BCI Server 306 for user authentication.

Note that the embodiments above for EEG authentication assume that the client device 302 is not trusted. So the access management and authentication service (STA) 304, the BCI Authentication Module 312 and the user-specific machine-learning model are hosted in a remote server, with the BCI Server 306 providing the communication channel between the client device 302 and the BCI Authentication Module 312.

But if we consider the client device 302 can be trusted, in some embodiments the access management and authentication service 304, the BCI Authentication Module 312 and the user-specific machine-learning model could run directly on the client device 302. The BCI Server 306 as a communication channel is no more useful but it still provides an interface to the access management and authentication service (STA) 304 for starting the authentication process and for retrieving the result.

Further note that although the embodiments are discussed in terms of "client device" and "BCI Server" presumes components running on different machines, there are contemplated embodiments where such is not the case. Accordingly, 2 different deployments (not trusted device / trusted device) are possible where functions operate on different machines (not trusted) and where all or most functions can possibly operate all on one machine (trusted device).

Operationally, the authentication process in the system 300 can include the following flow as follows:
0. The user 101 wants to access a web site requiring them to authenticate (e.g. SalesForce web site) and they are redirected to STA 304 for authentication.
1. The user 101 enters their username and because EEG authentication is enabled, the STA BCI Authenticator 305 calls the BCI Server 306 to start a new EEG authentication for the user 101.
2. The BCI Server 306 configures the BCI Authentication Module 312 with the user-specific machine-learning model.
3. STA 304 sends the Login Web App to the user's browser at client device 302. The login web app connects to the EEG-enabled headset 200 (using Bluetooth) to collect EEG data from the user's brain.
4. The Login Web App sends the EEG data to the BCI Server 306, which forwards the EEG data to the BCI Authentication Module 312 (via the MQTT Broker 310 in the BCI back-end 308).
5. The BCI Authentication Module 312 processes the EEG data with the user-specific machine-learning model and sends back an authentication result (success/failure) to the BCI Server 306 (via the MQTT Broker 310).
6. The BCI Server 306 records the authentication result and notifies the Login Web App at client device 302 of the success or failure.
7. The Login Web App at client device 302 provides a feedback to the user 101 and notifies STA 304 that the authentication is finished.
8. The BCI Authenticator 305 retrieves the authentication result from the BCI Server 306 so that STA 304 can grant the access to the web site or not to the user 101 wearing the headset 200.

FIG. 4 illustrates a use case where a Windows Logon authentication process is performed using a system 400 similar to the system of FIG. 3 and a different flow. The components in system 400 include the BCI back-end 308 having the BCI Authentication module 312 configured with the user-specific machine-learning model receiving EEG data and providing authentication result and broker 310 such as the MQTT Broker that is an open-source component used for message routing between clients. In this embodiment, a BCI server 406 provides a simple interface to STA 304 to trigger an EEG authentication and obtain the result and further provides a 2-way communication channel with STA Windows Logon Agent 404 at client device 402 to send EEG data from headset 200 and receive notification of authentication success or failure. The system 400 further includes a management and authentication service such as the SafeNet Trusted Access (STA) 304. The aforementioned STA Windows Logon Agent (WLA) 404 runs on the user's Windows PC and is in charge of the user authentication during logon/unlocking.

Operationally, the authentication process in the system 400 can include the following flow as follows:
1. The user presses Control+Alt+Delete to log on or unlock their Windows PC or client device 402. This triggers the Winlogon system process, which uses the STA Windows Logon Agent (WLA) 404 to perform the interactive logon.
   In case of logon, the user 101 enters their username or user identifier or a claimed identity.
2. WLA calls the BCI Server 406 to start a new EEG authentication for the user.
   The BCI Server 406 configures the BCI Authentication Module 312 with the user-specific machine-learning model.
3. WLA 404 connects to the EEG-enabled headset 200 (using Bluetooth) to collect EEG data from the user's brain.
4. WLA 404 sends the EEG data to the BCI Server 406, which forwards the EEG Data to the BCI Authentication Module 312 (via the MQTT Broker 310).
5. The BCI Authentication Module 312 processes the EEG data with the user-specific machine-learning model and sends back an authentication result (success/failure) to the BCI Server 406 (via to the MQTT Broker 310).
6. The BCI Server 406 records the authentication result and notifies the WLA 404 of the success or failure.
7. The WLA 404 provides a feedback to the user 101 and notifies STA 304 that the authentication is finished (resulting in a token being submitted to the token validator 405).
8. STA 304 retrieves the authentication result from the BCI Server 406 so that STA 304 can grant the access to the PC (402) or not.

System 400 can provide continuous authentication where the EEG sensors capture EEG signals and processing continues in the background after the user 101 has been successfully authenticated. When the user wears their headset, they are automatically authenticated and their Windows PC is unlocked (thanks to STA Windows Logon Agent). When the user removes their EEG-enabled headset, the EEG sensors stop collecting a real brain signal and start getting some noisy signal. The BCI Authentication Module 312 determines it is receiving invalid EEG data and WLA 404 is notified through the BCI Server 406 so that the WLA will automatically lock the Windows PC 402. If the user was on a current we application session, removal of the headset will cause the automatic locking of their Windows PC and of their current web application sessions.

Referring to FIG. 5, a method 500 of authentication using EEG signals can include the step 502 of recognizing a username (or user identity or claimed identity) as an input for access to a secure computer resource. Note that "username" can be considered an instance of a "user identifier" or "claimed identity" generally, but should be interpreted synonymously when interpreting the claims and the embodiments herein. For example, even though "username" may be used in the claim language, it should be considered that other user identities (like an email address) can be substituted as an equivalent for the username. The method can further include the steps of collecting at 504 EEG data from one or more sensors, initiating at 506 an EEG authentication process using an access management and authentication service via a Brain Computer Interface (BCI) server in communication with a BCI Authentication module upon detecting the username and the EEG data, forwarding at 508 the EEG data to the BCI Authentication module via the BCI server, receiving at 510 a result from the BCI Authentication module via the BCI server, and notifying at 512 the access management and authentication service of the result from the BCI Authentication module. At decision block 514, if the result of the authentication is a success, then the method 500 grants access to the secure computer resource at 518. If the result of the authentication is not a success at decision block 514, then access is denied at 516 and the method returns and awaits a username at 502. If the result of the authentication is a success at 518, the method can continue to collect EEG data and send such data to the BCI server in the background at 520. The method at decision block 522 can further determine if the user removed their headset or if there is a loss of the EEG signal. If there is a loss of the EEG signal at decision block 522, then the user is logged off at 524 and the and the method returns and awaits a username at 502. If there is no loss of signal at decision block 522, (the user is still presumably wearing the EEG sensors or headset) and the method continues by forwarding the EEG data to the BCI Authentication Module via the BCI server at step 508 as shown.

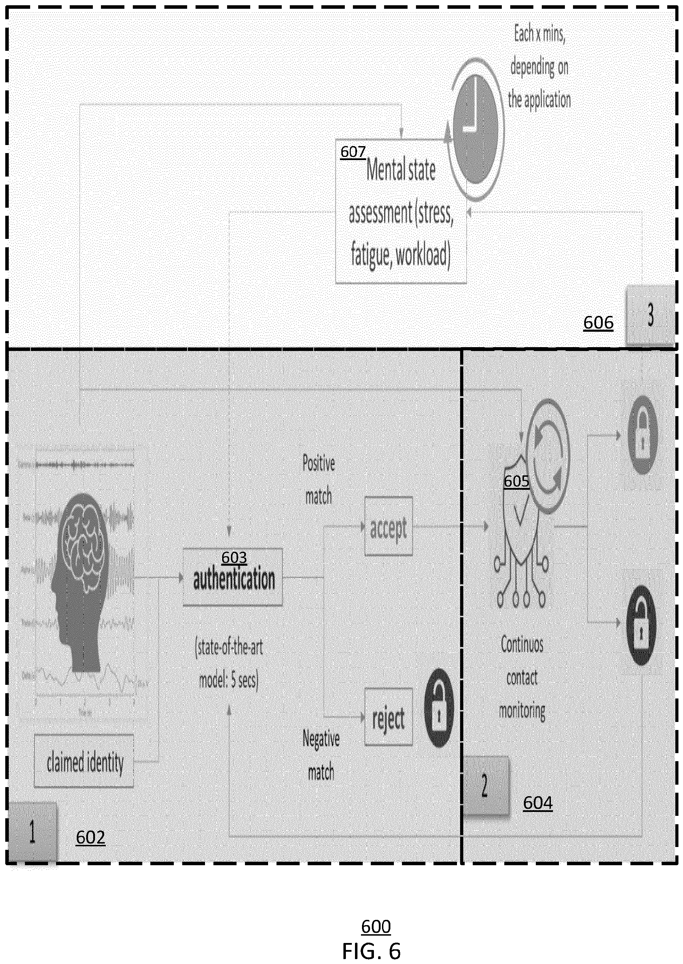

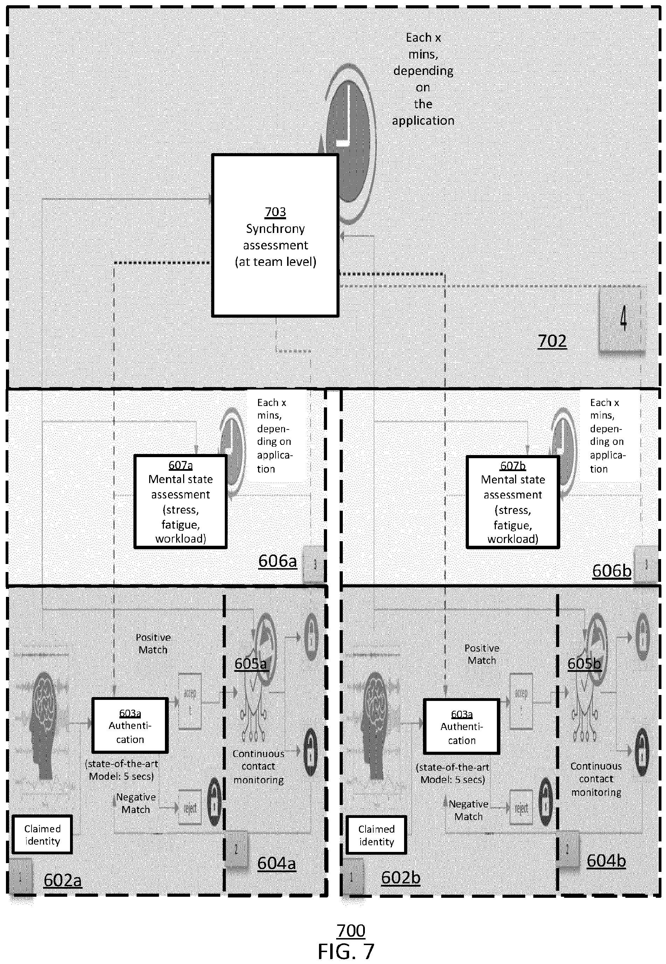

In yet other embodiments with reference to FIGs. 6-9, EEG Biometrics is used in making mental state and/or synchrony assessments for continuous authentication. The embodiments concerns an authentication system some of the aforementioned techniques with reference to FIGs. 1-5 for authenticating using EEG signals or biometrics but with further features where EEG signals are used to assess a personalized human functional state or mental state (e.g., workload, stress, fatigue) in an assessment 607 as shown in the system 600 of FIG. 6. Alternatively or in addition to the mental state assessment 607, EEG signals can be further used to make a synchrony assessment 703 as shown in the system 700 of FIG. 7. System 600 or 700 can further include an EEG contact monitoring security feature 604.

When accessing digital system(s), typically a password and/or some biometric data such as retina scan, a fingerprint, etc. is requested. Usually, an authentication system compares the received data with templates corresponding to the claimed identity of the person. If a match with enough confidence is obtained, then the authenticator may return an authentication certificate to the system, which then can provide access to that person. One of the issues is that passwords as well as biometric data can be spoofed resulting in unwanted opening of digital doors to imposters. In addition, certain digital environment will also benefit by the insurance that only the person granted access and not somebody else that tries to get access on their behalf is granted access during the time the person has granted access. Further, continuous access to a digital environment is also an issue under certain conditions of a persons' mental state. Human state influences human performance, and non-optimal conditions of human state may result in human error that is typically observed in more complex task environments. Moreover, in highly time-critical socio-technical environments (e.g., command & control C2 centers), the capability of the C2 center is driven by team collaboration where team members working apart work together towards a single mission. When collaboration is at stake, for example, when someone starts working against the team objectives, performance will degrade as well. In other words, providing access on the bases of claimed identity is one thing; making sure that a system is dealing with the same person over time, and the continued ability of high task performance of individuals and/or teams is yet another. The embodiments herein provide a solution for the problem of obtaining and maintaining silent and continuous authentication by using a brain computer interface application with several characteristics. The features are evidence in FIGs. 6 and 7 and include the following:
1) Distinctive features are extracted from the acquired EEG signal and matched with the stored model of a claimed identity (authentication module), resulting in acceptance or rejection in an authentication process 602 (or 602a or 602b) having a particular BCI authentication 603;
2) if accepted, a continuous skin-contact monitoring 604 (or 604a/604b) can start based on a simple threshold crossing detection using continuous contact monitoring module 605. While no threshold crossing is detected, access is/remains granted, otherwise step 1 above is repeated.
3) A personalized mental state assessment 606 (or 606a/606b) based on EEG features is performed in real-time or periodically (period depending on the application's requirements) to detect any degraded mental state condition. The output of the particular mental state assessment (607) using EEG signals influences the result of the access granting.
4) A synchrony assessment 702 (and more particularly a synchrony assessment at a team level 703) based on EEG features is performed periodically (period depending on the application's requirements) to detect any degraded 'team collaboration' condition. The output of the synchrony assessment influences the result of the access granting. Note that the synchrony assessment can be based on the hyperscanning methodology, capturing the EEG signals from multiple persons simultaneously.

The technical benefits of the embodiments focuses on a direct link between the brain and an authentication system. The unique brain print derived from the acquisition of EEG signals from the human brain allows not only for the detection of liveliness but also is hard to spoof. The embodiments also considers the notion of human state and human error reduction by influencing access to a system based on individual human state (e.g., workload, stress, fatigue, attention) and team state (synchronization between brain activity across team members). In addition, the embodiments trigger alerts when the brain computer interface is not or not well connected. Technically, the brain computer interface EEG sensors are integrated in a headset, but other EEG sensor arrangements are within contemplation of the embodiments such as sensors incorporated in headbands, visors, caps, earbuds, glasses or other form factors that would contact the scalp or other portion of the head to obtain adequate EEG readings.

The embodiments are uniquely beneficial and relevant in environments where secure access via authentication and human error and individual and/or team performance is at stake. In other words, securing that the right persons/team in an optimal state to get a job or objective done. The combined end-to-end solution herein is likely and most novel for use in highly secured C2 environments, but can be effectively used in other contexts such as gaming and other simulations.

The use case requires as illustrated in system 700 of FIG. 7 two or more persons to wear a headset equipped with electroencephalography (EEG) sensors to measure their brain activity.

Silent authentication 1: As soon as the persons start wearing their EEG-enabled headsets, their brain activity is captured and processed by the BCI Authentication Module (603a and 603b). Brain activity of both persons is analyzed in parallel (for mental state at 607a and 607b and for synchrony at 703), and both persons are authenticated via the "BCI Authentication Module". The person specific authentication models are learned during the enrollment authentication process.

Continuous authentication 2: EEG capture and processing continues in background for both persons by the "BCI Control Module" simultaneously after the persons have been successfully authenticated. Loss of EEG signals (as detected by continuous contact monitoring modules 605a or 605b), for example, by removing the EEG-enabled headset automatically signs the person(s) out.

Continuous authentication 3: EEG capture and processing is also relayed to the "BCI Human State Assessment Module" (607a and 607b) for a real-time assessment of human state (Mental Workload, Stress). Certain mental workload/stress levels generate alerts, which automatically signs the person out. Alerts can be configured based on particular application requirements. The person specific workload models are learned during the workload calibration process.

Continuous authentication 4: EEG capture and processing is also relayed to the "BCI Synchrony Assessment Module" 703 for a real-time assessment of team collaboration (Synchrony). Certain synchrony metrics generate alerts, which automatically signs both persons out. Alerts can be configured based on application requirements. The dyad specific synchrony models are learned during the synchrony calibration process.

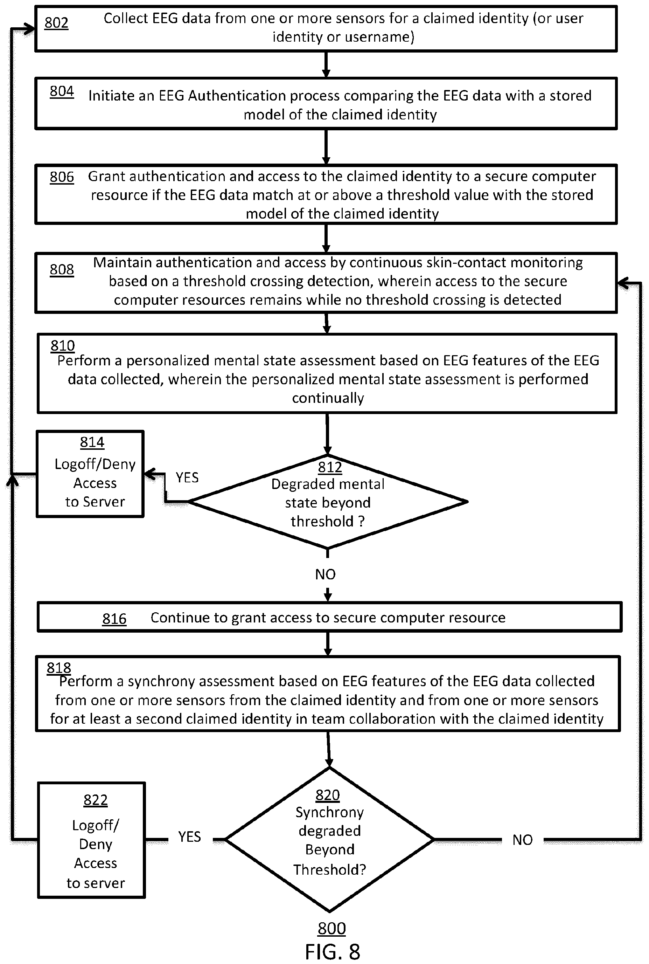

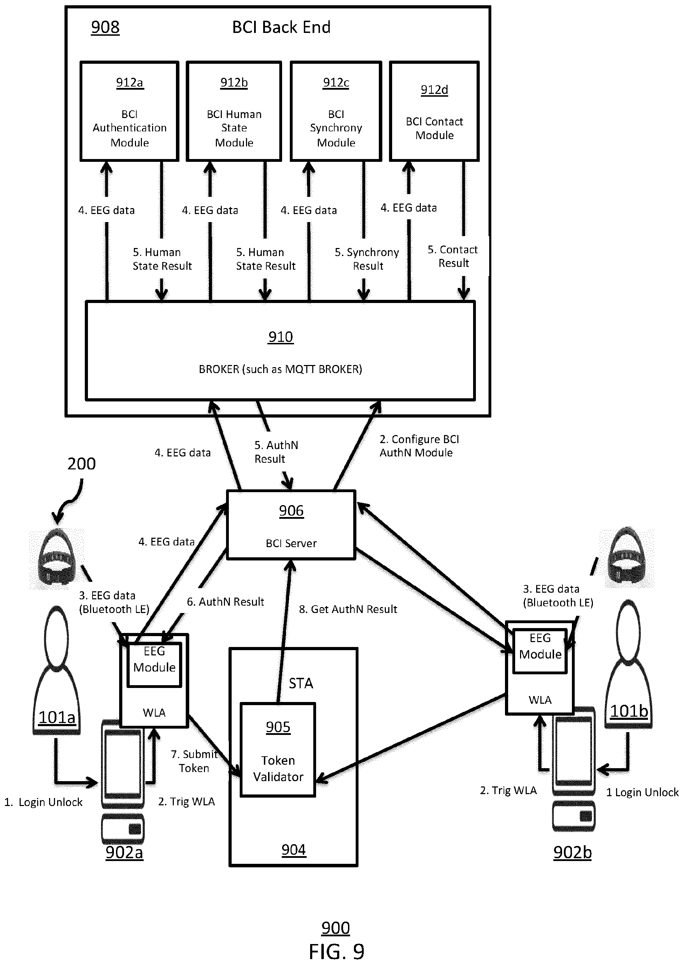

FIGs. 8 and 9 present use cases with FIG. 9 demonstrating the integration of the EEG authentication into a SafeNet Trusted Access (STA) solution using STA 904 (serving as a management and authentication service) as shown in the system 900 of FIG. 9.
1. When a person (101a or 101b) wears the EEG headset 200, the person will be automatically authenticated, and if successful the persons' Windows machine (902a or 902b) is unlocked (by the STA Windows Logon Agent) as explained with respect to FIG. 4.
2. When that person (101a or 101b) will access a web site that requires authentication (and still is wearing the headset), that person will be automatically authenticated by STA 904.
3. When that person is experiencing high levels of workload / stress, the Windows machine (902a or 902b) and the current web application session(s) are locked.
4. When two persons are authenticated to access their PC and are accessing the same web application but are not in an EEG sync mode, the Windows PC and the current web application session(s) will be locked.
5. When a person (101a or 101b) removes the headset 200, the Windows PC and the web application session(s) are locked.

The architecture of the system 900 can include the following components, including a "BCI Back-end" 908 including a BCI Authentication Module 912a configured with the person-specific model receiving EEG data, and the results from the BCI Human State (912b), Synchrony (912c) and Contact Modules (912d). The BCI Authentication Module 912a provides the authentication result.

The BCI Human State Module 912b can be configured with the person-specific model receiving EEG data and provides Human State result to Authentication Module 912a. The BCI Synchronization Module 912c can be configured with the dyad-specific model receiving EEG data and provides Synchrony result to the Authentication Module 912a. The BCI Contact Module 912d receiving EEG data can provides= its result to the Authentication Module 912a. The BCI Back-end 908 can further include a broker 910 such as the MQTT Broker which is an open-source component used for message routing between clients.

The system 900 further includes a BCI server 906 that provides a simple interface to STA 904 to trigger an EEG authentication and obtain the result. The BCI server 906 also provides a 2-way communication channel with STA Windows Logon Agent to send EEG data from headset(s) 200 and receive notification of authentication success (accept) or failure (reject). The system 900 further includes SafeNet Trusted Access (STA) 904 which is the authentication solution from Thales (CPL). The system 900 also includes STA Windows Logon Agent (WLA) running on the user's Windows PC (902a or 902b) and in charge of the user authentication during logon/unlocking. See the explanation related to FIG. 4 for further details regarding WLA.

The following flow descriptions for various scenarios include flows for Windows Logon, for web site authentication, for human (or mental) state authentication, for synchrony authentication, and for continuous authentication. Reference should be made to FIG. 9 and other figures as relevant.

### Workings Windows Logon

1. One or more persons (let's assume 2) presses Control+Alt+Delete to log on or unlock their Windows machines 902a or 902b. This triggers the Winlogon system process, which uses the STA Windows Logon Agent (WLA) to perform the interactive logon (see FIG. 4 and accompanying description). In case of logon, both persons enter their username.
2. WLA calls the BCI Server 906 to start a new EEG authentication for each person.
   The BCI Server 906 configures the BCI Authentication Module 912a with the person-specific model.
3. WLA connects to the EEG-enabled headset (using Bluetooth) to collect EEG data from each person.
4. WLA sends the EEG data to the BCI Server 906, which forward them to the BCI Authentication Module 912a (via the MQTT Broker 910).
5. The BCI Authentication Module 912a processes the EEG data with the person-specific model and sends back an authentication result (success/failure) to the BCI Server 906 (through to the MQTT Broker 910).
6. The BCI Server 906 records the authentication result and notifies the WLA of the success or failure.
7. The WLA provides feedback to the persons and notifies STA 904 that the authentication is finished (by providing a token to the token validator 905).
8. STA 904 retrieves the authentication result from the BCI Server 906 so that STA 904 can grant the access to the PC or not.

### Web site authentication

1. Both persons want to access a web site requiring the person to authenticate (e.g., TEAMS web site) and are redirected to STA 904 for authentication.
2. Both persons (101a and 101b) enter username and because EEG authentication is enabled, the STA BCI Authenticator 305 (see FIG. 3) calls the BCI Server 906 to start a new EEG authentication for both persons.
3. The BCI Server 906 configures the BCI Authentication Module 912a with the person-specific models.
4. STA 904 sends the Login Web App to the persons browser. The login web app connects to the EEG-enabled headset 200 (using Bluetooth) to collect EEG data from both persons.
5. The Login Web App sends the EEG data to the BCI Server 906, which forward them to the BCI Authentication Module 912a (through the MQTT Broker 910).
6. The BCI Authentication Module 912a processes the EEG data with the person-specific models and sends back an authentication result (success/failure) to the BCI Server 906 (through the MQTT Broker 910).
7. The BCI Server 906 records the authentication result and notifies the Login Web App (at the respective client devices 902a or 902b) of the success or failure.
8. The Login Web App provides feedback to both persons and notifies STA 904 that the authentication is finished.
9. The BCI Authenticator 305 (see FIG. 3) retrieves the authentication result from the BCI Server 906 so that STA 904 can grant the access to the web site or not.

### Human state authentication

1. Both persons want to access a web site requiring the person to authenticate (e.g., TEAMS web site) and are redirected to STA 904 for authentication.
2. Both persons enter username and because EEG authentication is enabled, the STA BCI Authenticator 305 (see FIG. 3) calls the BCI Server 906 to start a new EEG authentication for both persons.
3. The BCI Server 906 configures the BCI Authentication Module 912a with the person-specific models.
4. STA 904 sends the Login Web App to the persons browser. The login web app connects to the EEG-enabled headset 200 (using Bluetooth) to collect EEG data from both persons.
5. The Login Web App sends the EEG data to the BCI Server 906, which forward them to the BCI Authentication Module 912a and BCI Human State Module 912b through the MQTT Broker 910).
6. BCI Human State Module 912b assesses in real-time configurable personalized human state levels and generates alerts when observed values deviate from expected values.
7. The BCI Authenticator 305 (see FIG. 3) constantly listens to alerts from BCI Human State Module 912b.
8. If Human State alert is received, then BCI Authenticator 305 (see FIG. 3) results in failure (reject).
9. The BCI Server 906 records the authentication result and notifies the Login Web App (at the client device 902a or 902b) of the success or failure.
10. The Login Web App provides feedback to both persons and notifies STA 904 that the authentication is finished.
11. The BCI Authenticator 305 (see FIG. 3) retrieves the authentication result from the BCI Server 906 so that STA 904 can grant the access to the web site or not.

### Synchrony authentication

1. Both persons want to access a web site requiring the person to authenticate (e.g., TEAMS web site) and are redirected to STA 904 for authentication.
2. Both persons enter username and because EEG authentication is enabled, the STA BCI Authenticator 305 (see FIG. 3) calls the BCI Server 906 to start a new EEG authentication for both persons.
3. The BCI Server 906 configures the BCI Authentication Module 912a with the person-specific models.
4. STA 904 sends the Login Web App to the persons browser. The login web app connects to the EEG-enabled headset 200 (using Bluetooth) to collect EEG data from both persons.
5. The Login Web App sends the EEG data to the BCI Server 906, which forward them to the BCI Authentication Module 912a and BCI Synchrony Module 912c through the MQTT Broker 910).
6. BCI Synchrony Module 912c assesses in real-time level of EEG synchrony between dyads and generates alerts when observed values deviate from expected values.
7. The BCI Authenticator 305 (see FIG. 3) constantly listens to alerts from BCI Synchrony Module 912c.
8. If Synchrony alert is received, then BCI Authenticator 305 results in failure (reject)
9. The BCI Server 906 records the authentication result and notifies the Login Web App of the success or failure.
10. The Login Web App provides feedback to both persons and notifies STA 904 that the authentication is finished.
11. The BCI Authenticator 305 retrieves the authentication result from the BCI Server 906 so that STA 904 can grant the access to the web site or not.

### Continuous authentication

EEG capture and processing continues in background after the user has been successfully authenticated.
1. Both persons want to access a web site requiring the person to authenticate (e.g., TEAMS web site) and are redirected to STA 904 for authentication.
2. Both persons enter username and because EEG authentication is enabled, the STA BCI Authenticator 305 (see FIG. 3) calls the BCI Server 906 to start a new EEG authentication for both persons.
3. The BCI Server 906 configures the BCI Authentication Module 912a with the person-specific models.
4. STA 904 sends the Login Web App to the persons browser. The login web app connects to the EEG-enabled headset 200 (using Bluetooth) to collect EEG data from both persons.
5. The Login Web App sends the EEG data to the BCI Server 906, which forward them to the BCI Authentication Module 912a and BCI Contact Module 912d through the MQTT Broker 910).
6. BCI Connect or contact Module 912d generates alerts when no brain signal is received (probably receives only noise).
7. The BCI Authenticator 305 constantly listens to alerts from BCI Connect Module 912d.
8. If connect alert is received, then BCI Authenticator 305 results in failure (reject).
9. The BCI Server 906 records the authentication result and notifies the Login Web App of the success or failure.
10. The Login Web App provides feedback to both persons and notifies STA 904 that the authentication is finished.
11. The BCI Authenticator 305 (see FIG. 3) retrieves the authentication result from the BCI Server 906 so that STA 904 can grant the access to the web site or not.

In some embodiments and with further reference to FIG. 8, a method 800 of authentication using EEG signals can include collecting at 802 EEG data from one or more sensors for a claimed identity, initiating at 804 an EEG authentication process comparing the EEG data with a stored model of the claimed identity, granting at 806 authentication and access to the claimed identity to a secure computer resource if the EEG data match is at or above a threshold value with the stored model of the claimed identity, maintaining at 808 authentication and access by continuous skin-contact monitoring based on a threshold crossing detection, wherein access to the secure computer resources remains while no threshold crossing is detected, and performing at 810 a personalized mental state assessment based on EEG features of the EEG data collected where the personalized mental state assessment is performed continually while the method continues to grant access to the secure computer resources at 816 while no degraded mental state is detected beyond a threshold value at decision block 812. If a degraded mental state is detected beyond a certain threshold, then the user is logged off or denied access at 814 and the method returns to collect EEG data if available. In some embodiments, the method 800 further performs a synchrony assessment at 818 based on EEG features of the EEG data collected from one or more sensors from the claimed identity and from one or more sensors for at least a second claimed identity in team collaboration with the claimed identity, wherein the synchrony assessment is based on a hyperscanning methodology that captures EEG signals from multiple claimed identities simultaneously. At decision block 820, if a synchrony measurement is degraded beyond a certain threshold, then the user or users are logged off and/or denied access to the server or other computer resource at 822. If the synchrony measurement is not degraded beyond the threshold value at decision block 820, then the method 800 continues by maintaining authentication and access by continuous skin-contact monitoring based on a threshold crossing detection at 808.

In the absence of any specific clarification related to its express use in a particular context, where the terms " substantial " or " about " or "usually" in any grammatical form are used as modifiers in the present disclosure and any appended claims ( e.g., to modify a structure, a dimension, a measurement, or some other characteristic), it is understood that the characteristic may vary by up to 30 percent.

The terms "include" and "comprise" as well as derivatives thereof, in all of their syntactic contexts, are to be construed without limitation in an open, inclusive sense, ( e.g. , " including, but not limited to " ). The term "or," is inclusive, meaning and / or. The phrases "associated with" and "associated therewith," as well as derivatives thereof, can be understood as meaning to include, be included within, interconnect with, contain, be contained within, connect to or with, couple to or with, be communicable with, cooperate with, interleave, juxtapose, be proximate to, be bound to or with, have, have a property of, or the like.

Unless the context requires otherwise, throughout the specification and claims which follow, the word "comprise" and variations thereof, such as, "comprises" and "comprising," are to be construed in an open, inclusive sense, e.g., "including, but not limited to."

Reference throughout this specification to "one embodiment" or "an embodiment" or "some embodiments" and variations thereof mean that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content and context clearly dictates otherwise. It should also be noted that the conjunctive terms, "and" and "or" are generally employed in the broadest sense to include "and/or" unless the content and context clearly dictates inclusivity or exclusivity as the case may be. In addition, the composition of "and" and "or" when recited herein as "and/or" is intended to encompass an embodiment that includes all of the associated items or ideas and one or more other alternative embodiments that include fewer than all of the associated items or idea .

In the present disclosure, conjunctive lists make use of a comma, which may be known as an Oxford comma, a Harvard comma, a serial comma, or another like term. Such lists are intended to connect words, clauses or sentences such that the thing following the comma is also included in the list.

As the context may require in this disclosure, except as the context may dictate otherwise, the singular shall mean the plural and vice versa. All pronouns shall mean and include the person, entity, firm or corporation to which they relate. Also, the masculine shall mean the feminine and vice versa.

When so arranged as described herein, each computing device or processor may be transformed from a generic and unspecific computing device or processor to a combination device comprising hardware and software configured for a specific and particular purpose providing more than conventional functions and solving a particular technical problem with a particular technical solution. When so arranged as described herein, to the extent that any of the inventive concepts described herein are found by a body of competent adjudication to be subsumed in an abstract idea, the ordered combination of elements and limitations are expressly presented to provide a requisite inventive concept by transforming the abstract idea into a tangible and concrete practical application of that abstract idea.

The headings and Abstract of the Disclosure provided herein are for convenience only and do not limit or interpret the scope or meaning of the embodiments. The various embodiments described above can be combined to provide further embodiments. Aspects of the embodiments can be modified, if necessary to employ concepts of the various patents, application and publications to provide further embodiments.

## Claims

1. A system for authentication during a login process using electroencephalography (EEG) signals, comprising:
one or more processors;
a memory coupled to the one or more processors, the memory containing computer instructions which when executed causes the one or more processors to perform the steps of:
collecting EEG data from one or more sensors for a claimed identity;
initiating an EEG authentication process comparing the EEG data with a stored model of the claimed identity;
receiving authentication and access to the claimed identity to a secure computer resource if the EEG data match at or above a threshold value with the stored model of the claimed identity;
receiving and maintaining authentication and access by continuous skin-contact monitoring based on a threshold crossing detection, wherein access to the secure computer resources remains while no threshold crossing is detected;
performing a personalized mental state assessment based on EEG features of the EEG data collected, wherein the personalized mental state assessment is performed continually; and
continuing to grant access to the secure computer resources while no degraded mental state is detected beyond a threshold value.

2. The system of claim 1, wherein the one or more processors are further configured to deny access to the secure computer resources upon detection of a degraded mental state beyond the threshold value.

3. The system of claim 1, wherein the step of performing the personalized mental state assessment is performed continually in real-time or periodically.

4. The system of claim 1, wherein the one or more processors are further configured to perform a synchrony assessment based on EEG features of the EEG data collected from one or more sensors from the claimed identity and from one or more sensors for a second claimed identity in team collaboration with the claimed identity.

5. The system of claim 1, wherein the one or more processors are further configured to perform a synchrony assessment based on EEG features of the EEG data collected from one or more sensors from two or more claimed identities based on a hyperscanning methodology that captures EEG signals from multiple claimed identities simultaneously.

6. The system of claim 5, wherein the personalized mental state assessment monitors an individual's human state based on correlated values for workload, stress, fatigue, or attention and the synchrony assessment monitors a team state with respect to synchronization between brain activity among team members.

7. The system of claim 1, wherein a head worn apparatus having at least two EEG sensors including two electrodes that performs the step of collecting the EEG data from the one or more sensors.

8. The system of claim 1, wherein a head-worn apparatus having at least two EEG sensors performs as a data acquisition unit that further uses wireless communications to connect the at least two EEG sensors for streaming the EEG data to a Brain Computer Interface (BCI) Authentication module.

9. The system of claim 1, wherein the secure computer resource is a secure web site and wherein an access management and authentication service sends a login web app to a browser in a client device wherein the login web app connects an EEG enabled headset using Bluetooth to collect the EEG data from the one or more sensors and forwards the EEG data to a BCI server and further receives the result from a BCI server in communication with a BCI authentication module.

10. The system of claim 1, wherein the secure computer resource uses a Winlogon system process which uses a Windows Logon Agent (WLA) as part of an access management and authentication service and wherein the WLA calls a BCI server to start a new EEG authentication after detection of a username as an input.

11. The system of claim 10, wherein the WLA connects an EEG enabled headset having the one or more sensors and collects the EEG data using Bluetooth wireless communications from the EEG enabled headset, sends the EEG data to a BCI server and further receives notification from the BCI server of the result of the authentication, wherein the BCI server is in communication with a BCI authentication module.

12. A head worn apparatus used for authentication during a login process using electroencephalography (EEG) signals, comprising:
one or more EEG sensors;
one or more processors;
a memory coupled to the one or more processors and the one or more EEG sensors, the memory containing computer instructions which when executed causes the one or more processors to perform the steps at the head worn apparatus of:
collecting EEG data from the one or more EEG sensors upon recognizing a user identity as an input for access to a secure computer resource;
initiating an EEG authentication process with an access management and authentication service (STA) via a Brain Computer Interface (BCI) server in communication with a BCI Authentication module upon detecting the user identity and the EEG data;
sending the EEG data to the BCI Authentication module via the BCI server;
continuing to capture and sending the EEG data in a background process to the BCI server after an initial successful authentication and logon to perform a personalized mental state assessment based on EEG features of the EEG data collected, wherein the personalized mental state assessment is performed continually; and
continuing to receive access to the secure computer resources while no degraded mental state is detected beyond a threshold value.

13. The head worn apparatus of claim 13, wherein the one or more processors are further configured to perform a synchrony assessment based on EEG features of the EEG data collected from the one or more sensors from a claimed identity associated with the user identity and from one or more sensors for at least a second claimed identity in team collaboration with the claimed identity based on a hyperscanning methodology that captures EEG signals from multiple claimed identities simultaneously

14. A method for authentication during a login process using electroencephalography (EEG) signals, comprising:
collecting EEG data from one or more sensors for a claimed identity;
initiating an EEG authentication process comparing the EEG data with a stored model of the claimed identity;
granting authentication and access to the claimed identity to a secure computer resource if the EEG data match at or above a threshold value with the stored model of the claimed identity;
maintaining authentication and access by continuous skin-contact monitoring based on a threshold crossing detection, wherein access to the secure computer resources remains while no threshold crossing is detected;
performing a personalized mental state assessment based on EEG features of the EEG data collected, wherein the personalized mental state assessment is performed continually;
continuing to grant access to the secure computer resources while no degraded mental state is detected beyond a threshold value; and
performing a synchrony assessment based on EEG features of the EEG data collected from one or more sensors from the claimed identity and from one or more sensors for at least a second claimed identity in team collaboration with the claimed identity, wherein the synchrony assessment is based on a hyperscanning methodology that captures EEG signals from multiple claimed identities simultaneously.

15. The method of claim 14, wherein the method further uses the EEG data for silent authentication and detection of liveliness of the claimed identity.
